# EUROPÄISCHE PATENTANMELDUNG

(11) **EP 1 034 705 A2**
(43) Veröffentlichungstag der Anmeldung: **13.09.2000**
(21) Anmeldenummer: 00103435.4
(22) Anmeldetag: 25.02.2000
(51) Int. Cl.: A23L 1/22, A23P 1/04

(54) **Einbettungsmittel und Verfahren zur Einbettung von Riech- und/oder Aromastoffen**

(30) Priorität: 10.03.1999 DE 19910465; 17.11.1999 DE 19955131
(71) Anmelder: HAARMANN & REIMER GMBH, D-37601 Holzminden (DE)
(72) Erfinder: Rasp, Christian, Dr., 51467 Bergisch Gladbach (DE); Brod, Helmut, Dr., 51061 Köln (DE); Hinderer, Jürgen, Dr., 51381 Leverkusen (DE); Renz, Karl-Heinz, 37603 Holzminden (DE)
(74) Vertreter: Mann, Volker, Dr. (DE)

(57) **Zusammenfassung**

Die vorliegende Erfindung betrifft Einbettungsmittel für Riech- und/oder Aromastoffe, die sich dadurch auszeichnen, daß sie einen Trägerstoff enthalten, der sowohl als Adsorbens als auch als Feinverteilungsmittel für die Riech- und/oder Aromastoffe dient. Ferner sind Gegenstand der Erfindung ein Verfahren zur Einbettung von Riech- und/oder Aromastoffen sowie die Verwendung von Einbettungsmitteln zur Herstellung eines mehrphasigen Feststoffverbundes mit eingebetteten Riech- und/oder Aromastoffen.

## Beschreibung

Die vorliegende Erfindung betrifft Einbettungsmittel für Riech- und/oder Aromastoffe-, die sich dadurch auszeichnen, daß sie einen Trägerstoff enthalten, der sowohl als Adsorbens als auch als Feinverteilungsmittel für die Riech- und/oder Aromastoffe dient. Gegenstand der Erfindung ist auch ein Verfahren zur Einbettung von Riech- und/oder Aromastoffen sowie die Verwendung der Einbettungsmitteln zur Herstellung eines mehrphasigen Feststoffverbundes mit eingebetteten Riech- und/oder Aromastoffen, sowie der mehrphasige Feststoffverbund.

Die Herstellung von eingebetteten Riech- und/oder Aromastoffen ist an sich bekannt, ebenso wie der Einsatz von Methylcellulose oder Hydroxypropylmethylcellulose als Beeinflusser der Glasübergangstemperatur (T_{g}) und Verzögerer der Aromafreisetzung in einer Kohlenhydratmatrix. Beispielhaft sei hierzu auf WO 94/23593, US 5 603 971 verwiesen. Die Produktfertigung erfolgt nach den bekannten Verfahren unter Einsatz von herkömmlichen beheizten Doppelwellenschneckenextrudern, wobei die Riech- und/oder Aromastoffe der bereits geschmolzenen wasserbeaufschlagten Matrix über eine Kolbenpumpe zugeführt werden. In diesen Rezepturen nimmt Wasser als Plastifizierungsmittel eine zentrale Rolle ein. Ebenso finden Emulgatoren bei den herkömmlichen Verfahren zur Einbettung von Aromastoffen Einsatz (WO 94/23593, US 5 603 971).

Der mit den zuvor genannten herkömmlichen Verfahren erreichte Gehalt an eingebetteten (verkapselten) Riech- und/oder Aromastoffen in einer Kohlenhydratmatrix führte bisher jedoch nicht zu zufriedenstellenden Ergebnissen. Hohe Gehalte an eingebettetem Aromaöl werden derzeit vorzugsweise mit einer Batch-Emulgiertechnik erzielt, wie sie bei WO 96/11589, US 4 707 367 beschrieben ist. Dieses herkömmliche Verfahren weist allerdings eine Reihe von Nachteilen auf. Beispielhaft sei hier die Produktion unter Druck, hohe Verweilzeiten der Schmelze im Rührkessel, benötigte Temperaturen von 130°C, ein hoher Wassergehalt, niedrige Glastemperaturen der Schmelze sowie eine zeitaufwendige Nachbehandlung durch einen wasserentziehenden zusätzlichen Verfahrensschritt genannt.

Aufgabe der vorliegenden Erfindung ist die Bereitstellung eines Einbettungsmittels für Riech- und/oder Aromastoffe sowie ein Verfahren zur Einbettung von bis zu 30 Gew.-% der Riech- und/oder Aromastoffe bezogen auf das Gesamtgewicht der Zubereitung.

Es wurden Einbettungsmittel für Riech- und/oder Aromastoffe gefunden, die einen Trägerstoff, der sowohl als Adsorbens als auch als Feinverteilungsmittel für die Riech- und/oder Aromastoffe dient, enthalten.

Vorzugsweise sind das Einbettungsmittel und der Trägerstoff nicht miteinander mischbar.

In das Einbettungsmittel sollen bevorzugt ≤ 35 Gew.%, insbesondere bevorzugt 11 bis 30 Gew.-%, der Riech und/oder Aromastoffe bezogen auf das Gesamtgewicht eingebettet werden können.

Erfindungsgemäß handelt es sich bei den Einbettungsmitteln vorzugsweise um Polyolschmelzen, wobei die Polyolschmelzen aus einer Kohlenhydratmatrix bestehen, die vorzugsweise zwischen 40 und 50 Gew.-% Maltodextrin, 20 bis 30 Gew.-% Saccharose und/oder Lactose sowie 20 bis 30 Gew.-% Glucose enthalten.

Erfindungsgemäß enthält das Einbettungsmittel vorzugsweise 0,1 bis 20 Gew.-%, besonders bevorzugt 1 bis 15 Gew.-% an Trägerstoff, ganz besonders bevorzugt 2 bis 10 %, wobei es sich vorzugsweise um Celluloseether oder Kieselgel und besonders bevorzugt um Methylcellulose, Hydroxypropylcellulose, Hydroxypropylmethylcellulose oder feinteilige feste Kieselsäure (pyrogene Kieselsäure, Kieselgur oder getrocknetes und zerkleinertes Kieselgel) handelt.

Vorzugsweise weisen die in dem Einbettungsmittel enthaltenen Trägerstoffe eine Körnung von < 300µm, besonders bevorzugt von < 100 µm und höchst bevorzugt von < 63 µm auf oder sind vorzugsweise in Gelkörpern von < 63 µm feinzerteilbar. Erfindungsgemäß zeichnet sich das Einbettungsmittel dadurch aus, daß die Riech- und/oder Aromastoffe durch Adsorption oder Gelbildung an die Trägerstoffe fixiert werden. Aufgrund der erfindungsgemäßen Eigenschaft, daß Einbettungsmittel und Trägerstoff nicht mischbar sind, werden die Riech- und/oder Aromastoffe als Dispersion in die Schmelze eingebettet.

Die erfindungsgemäße Einbettung von Riech- und/oder Aromastoffen läßt sich dadurch erreichen, daß das zuvor beschriebene Einbettungsmittel eingesetzt wird. Erfindungsgemäß bevorzugt ist ein Verfahren zur Einbettung von Riech- und/oder Aromastoffen bei dem das Einbettungsmittel und die Trägerstoffe im einem pulvrigen Gemisch homogen verteilt werden, einem Schmelzeinbetter, z.B. einem gleich- oder gegenläufigen Zweiwellenextruder, einem Einwellenextruder oder einem kontinuierlichen Kneter, das Pulver aus Einbettungsmitteln und Trägerstoffen kontinuierlich zugeführt wird, der Trägerstoff mit Riech- und/oder Aromastoffen beladen wird, die Schmelzeinbettung der Riech- und/oder Aromastoffe erfolgt, die mehrphasige Einbettungsschmelze kontinuierlich abgeführt wird und nach Erkalten der Einbettungsschmelze ein mehrphasiger Feststoffverbund entsteht. Vorzugsweise erfolgt die erfindungsgemäße Herstellung von eingebetteten Riech- und/oder Aromastoffen dadurch, daß die Einbettung bei Temperaturen zwischen 90°C und 110°C und die Extrusion bei Temperaturen zwischen 80 und 95°C erfolgt. Erfindungswesentlich ist, daß nach Erkalten der erfindungsgemäßen Einbettungsschmelze ein mehrphasiger Feststoffverbund entsteht. Im Gegensatz dazu handelt es sich bei den Produkten, die mit herkömmlichen Verfahren hergestellt werden um einphasige Polyolschmelzen, wobei sich die überraschenden erfindungsgemäßen hohen Gew.-% an eingebetteten Riech- und/oder Aromastoffen in den herkömmlichen einphasigen Polyolschmelzen nicht erreichen lassen.

Vorzugsweise enthält der erfindungsgemäße erstarrte mehrphasige Feststoffverbund bis zu 6 Gew.-%, besonders bevorzugt zwischen 1 und 4 Gew.-% an Wasser. Als besonderer Vorteil gegenüber herkömmlichen Verfahren, bei denen Wasser als Plastifizierungsmittel mit 5 bis10 Gew.-% eine zentrale Rolle bei den Rezepturen einnimmt (WO 94/23593, US 5 603 971) ist bei dem erfindungsgemäßen Verfahren kein zusätzlicher Einsatz von Wasser erforderlich. Vorteilhaft ist außerdem, daß im Gegensatz zu einer Reihe herkömmlicher Verfahren (US 2 809 895, US 3 041 180, US 2 856 291, US 2 857 281, US 3 704 137) bei dem erfindungsgemäßen Verfahren auch kein Zusatz von Emulgatoren erforderlich ist.

Bevorzugt ist ferner, daß sich das erfindungsgemäße Verfahren dadurch auszeichnet, daß der Trägerstoff mit Riech- und/oder Aromastoffen beladen wird, bevor er der Schmelzeinbettung zugeführt wird. Erfolgt die Zuführung der Riech- und/oder Aromastoffe- erst im Schmelzeinbettungsbereich leidet die Produktqualität erheblich. Dies äußert sich durch Klebrigkeit und durch wesentlich niedrigere Gehalte an eingebetteten Riech- und/oder Aromastoffen im Endprodukt.

Gegenstand der Erfindung ist auch der mehrphasige Feststoffverbund als Endprodukt, der dadurch gekennzeichnet ist, daß die disperse Phase, bestehend aus Trägerstoff mit adsorbiertem Aroma, in der kontinuierlichen Phase aus erstarrter Polyolschmelze überschüssige Riech- und/oder Aromastoffe aufnimmt und bindet, die andernfalls von der kontinuierlichen Phase nicht aufgenommen werden könnten

Der mehrphasige Feststoffverbund zeichnet sich überraschenderweise durch einen hohen Gehalt an Riech und/oder Aromastoffen aus.

Die Riech- und/oder Aromastoffe für den erfindungsgemäßen mehrphasigen Feststoffverbund sind im allgemeinen fest (auch sprühgetrocknet) oder flüssig.

Alle Aromen- und Riechstoffrichtungen, die in der Industrie Anwendung finden können, kommen für den erfindungsgemäßen Feststoffverbund in Frage, also z.B. Beeren, Citrus, Bergamotte, Kernobst, Käse, Fleisch, Fisch, Meeresfrüchte, Gewürze, Kräuter, Gemüse, Kaffee, Schokolade, Vanille, Butter, Karamel, Mint, Tabak, Holz, Blumen, etc.

Als Aromen und Riechstoffe kommen komplexe Aroma- und Riechstoffkompositionen, die alle bisher für Aromen und Riechstoffe verwendete Einzelkomponenten, also Aroma und/oder Riechstoffe sowie etherische Öle oder Fraktionen daraus enthalten können.

Als Riech- und/oder Aromastoffe seien beispielsweise genannt:
tierische Riechstoffe, wie Moschuskörneröl, Zibeth, Castoreum, Ambra;
pflanzliche Riechstoffe, wie Sandelholzöl, Neroliöl, Bergamottöl, Limonen, Lavendelöl, Salbeiöl, Rosmarinöl, Pfefferminzöl, Eukalyptusöl, Verbenaöl, Citronellöl, Cajeputöl, Sapinöl, Nelkenöl, Kamillenöl, Costus, Labdanumöl, Ginsterextrakt, Broomextrakt, Karottensamenextrakt, Jasminextrakt, Mimosenextrakt, Narzissenextrakt, Olibanumextrakt, Rosenextrakt und ähnliche; und
Chemikalien wie Acetophenon, Dimethylindanderivate, Naphthalinderivate, Allylcaprate, α-Amylzimtaldehyd, Anethol, Anisaldehyd, Benzylacetat, Benzylalkohol, Benzylpropionat, Borneol, Cinnamylacetat, Zimtalkohol, Citral, Citronellal, Cuminaldehyd, Cyclamenaldehyd, Decanol, Ethylbutyrat, Ethylcaprat, Ethylcinnamat, Ethylvanillin, Eugenol, Geraniol, Hexenol, α-Hexylzimtaldehyd, Hydroxycitronellal, Indol, Isoamylacetat, Isoamylalkohol, Isovalerat, Isoeugenol, Linalool, Linalylaceat, p-Methylacetophenon, Methylanthranilat, Methyldihydrojasmonat, Methyleugenol, Methyl-β-naphthylketon, Methylphenylcarbenylacetat, Moschusketon, Moschusxylol, Phenylacetoaldehyddimethylacetat, β-Phenylethylalkohol, 3,3,5-Trimethylcyclohexanol, γ-Undecalacton, Undecenal, Vanillin und ähnliches.

Diese Aroma- und/oder Riechstoffe können einzeln oder in Kombination verwendet werden.

Die Aromastoffe und/oder Riechstoffe können einen Trägerstoff enthalten, der sowohl als Adsorbens als auch als Feinverteilungsmittel für die Riech- und/oder Aromastoffe dient.

Die eingebetteten Riech- und Aromastoffe (bzw. die Zubereitung) zeichnen sich durch eine hohe Lagerstabilität aus.

Im folgenden wird die Anmeldung unter Bezugnahme auf die Figuren und Beispiele näher erläutert:

### Beispiele:

### 1. Erfindungsgemäße Zusammensetzung des Einbettungsmittels:

Als Hauptkomponenten des erfindungsgemäßen Einbettungsmittels (1) sind eine Kohlenhydratmatrix, ein Trägerstoff und je nach Bedarf ein Gleitmittel zu nennen. Die einzelnen, handelsüblichen, pulvrigen Bestandteile sind in der folgenden Auflistung näher definiert:
(a) Maltodextrin DE 15-19 40-50 Gew.-%
   (Polysaccharid mit Zuckeranteilen)
(b) Saccharose (Puderzucker) und/oder 20-30 Gew.-%
   Lactose (Monohydrat)
(c) Glucose (Anhydrat) 20-30 Gew.%
(d) Methylcellulose oder
   Hydroxypropylcellulose oder
   Hydroxypropylmethylcellulose oder
   Kieselgel 5-10 Gew.-%
(e) Magnesiumstearat 0,05-1 Gew.-%.

Dabei entsprechen die Bestandteile (a) ― (c) der Kohlenhydratmatrix, der Bestandteil (d) stellt den Trägerstoff dar und bei dem Bestandteil (e) handelt es sich um ein Gleitmittel. Die bei dem erfindungsgemäßen Verfahren verwendeten Trägerstoffe weisen zum Teil unterschiedliche Siebfraktionen auf, die in Tabelle 1 näher erläutert sind.

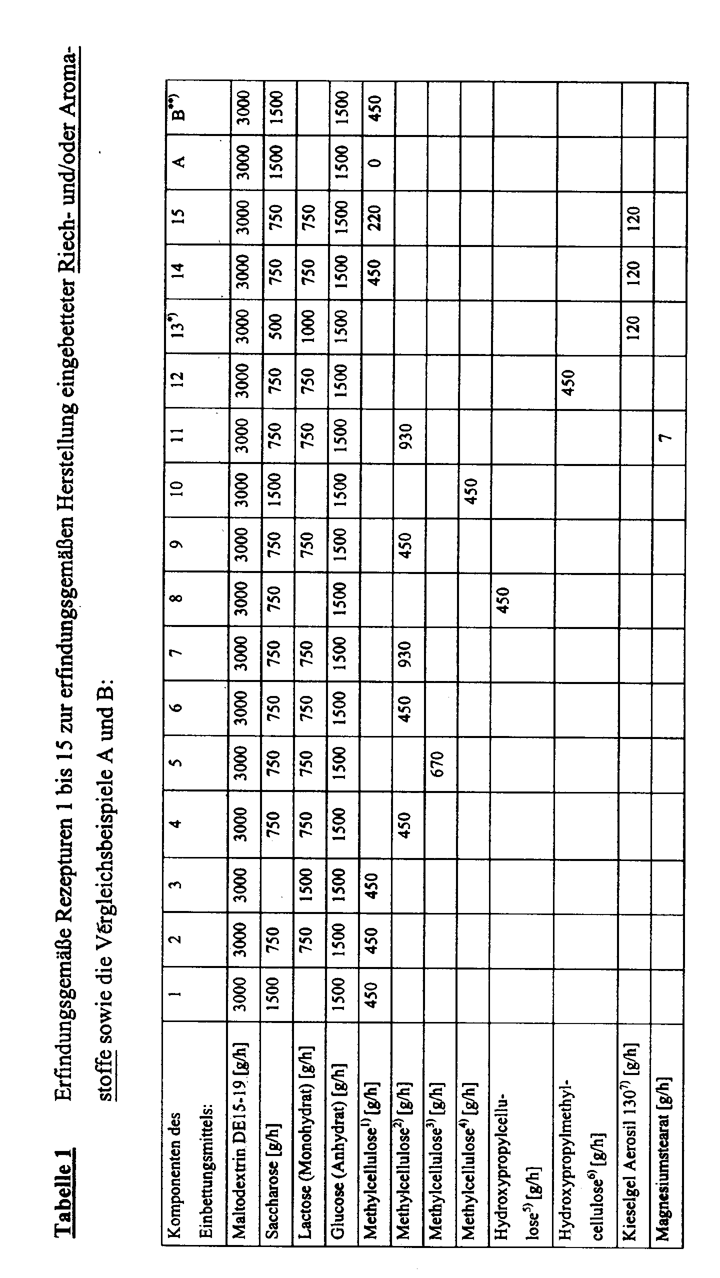

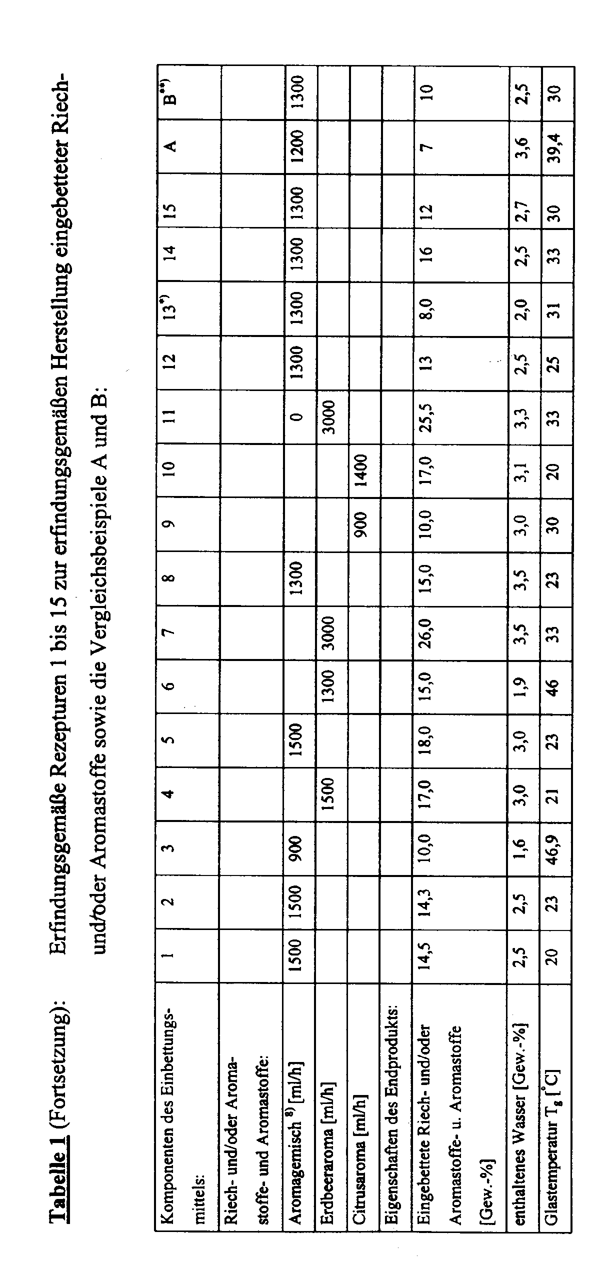

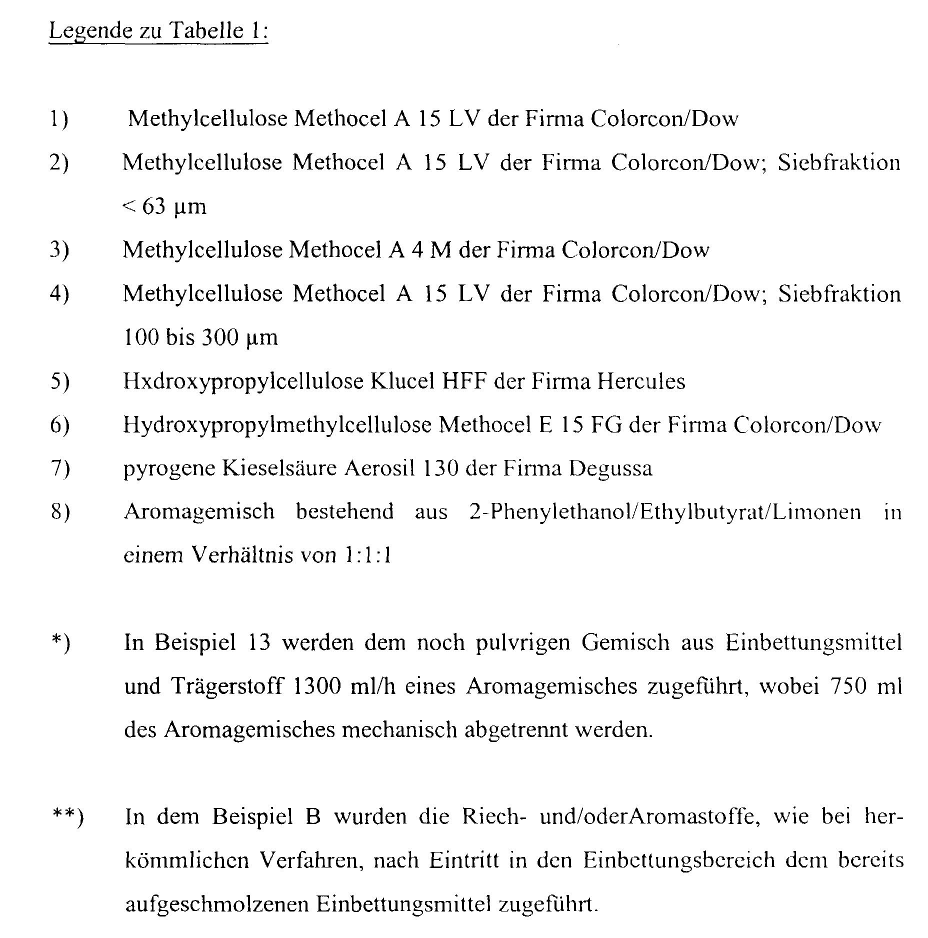

### 2. Riech- und/oderAromastoffe für die Beispiele:

Die beispielhaft verwendeten Riech- und/oderAromastoffe (6) sind im folgenden aufgelistet:
Modellaroma bestehend aus einem Gemisch aus 2-Phenylethanol/ Ethylbutyrat/ Limonen (Firma Haarmann & Reimer (Holzminden)) im Verhältnis 1:1:1
Erdbeeraroma (Firma Haarmann & Reimer (Holzminden))
Citrusaroma (Firma Haarmann & Reimer (Holzminden))

### 3. Beispiele für erfindungsgemäße Rezepturen zur erfindungsgemäßen Herstellung eingebetteter Riech- und/oder Aromastoffe:

Die genauen Mengenangaben der erfindungsgemäßen Rezepturen (Beispiel 1 bis 13), die bei dem erfindungsgemäßen Verfahren zur Herstellung eingebetteter Riech- und/oder Aromastoffe zum Einsatz kommen sind in der Tabelle 1 zusammengestellt. Ebenso sind hier verschiedene Qualitätsmerkmale des mehrphasigen Endproduktes aufgeführt, wie z. B. Anteil an eingebetteten Riech- und/oder Aromastoffen, Anteil an enthaltenem Wasser sowie die Glastemperatur (T_{g}). Außerdem sind in Tabelle 1 zwei Vergleichsbeispiele A und B aufgeführt, um den besonderen Vorteil des erfindungsgemäßen Verfahrens, nämlich die Zufuhr der Riech- und/oder Aromastoffe vor Eintritt des noch pulvrigen Gemisches aus Einbettungsmittel und Trägerstoff in den Bereich der Einbettungsschmelze, sowie den Effekt des zusätzlichen Trägerstoffs zur Erhöhung des Aromagehalts, hervorzuheben.

### 4. Erfindungsgemäßes Verfahren zur Herstellung eingebetteter Riech- und/oder Aromastoffe:

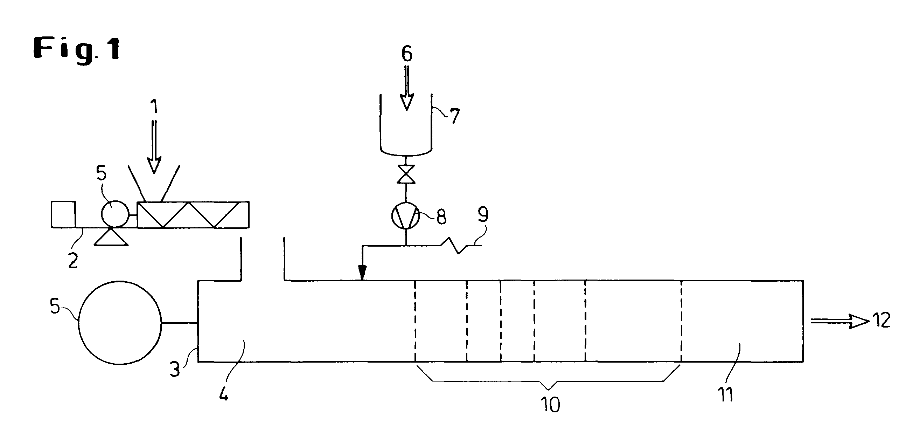

Im folgenden wird das erfindungsgemäße Verfahren unter Bezug auf Figur 1 näher erläutert.

Bei dem erfindungsgemäßen Verfahren werden die zuvor genannten erfindungsgemäßen pulvrigen Bestandteile, wie Kohlenhydratmatrix, Trägerstoff und gegebenenfalls Gleitmittel, für 10 Minuten in einem herkömmlichen Pflugscharmischer zu einem homogenen Pulvergemisch, dem erfindungsgemäßen Einbettungsmittel (1), vermengt. Anschließend wird dieses homogene pulvrige Einbettungsmittel (1) einem kontinuierlich arbeitenden geschlossenen bei 90 bis 130°C beheizten Schmelzeinbetter (3) über eine gravimetrische Dosiervorrichtung (2) mit Doppelwellendosierschnecke kontinuierlich zugeführt. Zur Dosierung von 3-15 kg/h an Pulvergemisch eignet sich eine herkömmliche Dosiervorrichtung (2), beispielsweise der Firma Brabender.

Über Gewindeelemente (4) des Schmelzeinbetters (3) hinweg wird das erfindungsgemäße Einbettungsmittel (1) kontinuierlich weitertransportiert.

Noch vor dem Eintritt des erfindungsgemäßen Einbettungsmittels (1) in den Bereich der Knetelemente des Schmelzeinbetters (3) werden dem noch nicht geschmolzenen, pulvrigen Einbettungsmittel (1) die Riech- und/oder Aromastoffe (6) zugeführt. Dies ist ein entscheidender Vorteil des erfindungsgemäßen Verfahrens, da sich so sehr viel höhere Gehalte an Riech- und/oder Aromastoffen (6) einbetten lassen. Zum Vergleich sei hier auf die Beispiele 1 und B in Tabelle 1 verwiesen. In Beispiel 1 werden die Riech- und/oder Aromastoffe (6) erfindungsgemäß vor Eintritt in den Einbettungsbereich dem noch pulvrigen Einbettungsgemisch (1) zugeführt, in Beispiel B werden sie, in herkömmlicher Weise, nach Eintritt in den Einbettungsbereich dem bereits aufgeschmolzenen Einbettungsgemisch zugeführt. Dem erfindungsgemäßen Anteil von 14,5 Gew.-% an eingebetteten Riech- und/oder Aromastoffen (Beispiel 1) stehen nur 10 Gew.-% durch das herkömmliche Verfahren (Beispiel B) gegenüber. Erfindungsgemäß werden die Riech- und/oder Aromastoffe (6) durch Adsorption oder Gelbildung an den im Einbettungsmittel (1) homogen verteilten Trägerstoff fixiert. Zur Zufuhr von Riech- und/oder Aromastoffen (6) läßt sich eine herkömmliche Doppelkolbenpumpe (8) beispielsweise des Typs P402 der Firma Latek einsetzen. Diese Pumpe fördert über ein herkömmliches Druckhalteventil (9). Der Doppelwellenschneckenextruder (3), beispielsweise der Firma Baier, zeichnet sich erfindungsgemäß durch einen Schmelzeinbetterbesatz aus Knet- und Gewindeelementen (10) aus. Im weiteren Verlauf des erfindungsgemäßen Verfahrens erfolgt in dem Doppelwellenschneckenextruder (3) die Bildung einer Zuckerschmelze und die Einbettung der an den Trägerstoff fixierten und im Einbettungsmittel (1) homogen verteilten Riech- und/oder Aromastoffe (6). Da sich der erfindungsgemäß beladene Trägerstoff im Einbettungsmittel (1) nicht auflöst, entsteht eine Dispersion. Die erfindungsgemäße mehrphasige Einbettungsschmelze wird anschließend kontinuierlich über Gewindeelemente der Doppelwellensehnecke (11) zur Extrusion bei 80 bis 95°C abgeführt. Die erstarrte mit Riech- und/oder Aromastoffen und (6) gesättigte Einbettungsschmelze enthält nur zwischen 1 und 4 Gew.-% an Wasser.

Mit dem zuvor beschriebenen erfindungsgemäßen Verfahren lassen sich Endprodukte herstellen, bei denen in einem erfindungsgemäßen mehrphasigen Feststoffverbund bis zu 30 Gew.-% an Riech- und/oder Aromastoffen (6) eingebettet werden können. Im Vergleich dazu werden bei bekannten Verfahren (z.B. WO 94/23593, US 5 603 971), bei denen die Riech- und/der Aromastoffe nach Eintritt in den Schmelzeinbettungsbereich zugeführt werden, nur 10 Gew.-% an Riech- und/oder Aromastoffen eingebettet, wie aus dem Vergleichsbeispiel B in Tabelle 1 zu entnehmen ist.

Nach Erstarren der mit Riech- und/oder Aromastoffen gesättigten Kohlenhydratmatrix, entsteht als Endprodukt ein mehrphasiger Feststoffverbund mit bis zu 30 Gew.-% an eingebetteten Riech- und/oder Aromastoffen. Da sich der mit Riech- und/oder Aromastoffen beladene Trägerstoff beim Einschmelzen des erfindungsgemäßen pulvrigen Gemisches aus Kohlenhydratmatrix und Trägerstoff nicht in der Kohlenhydratmatrix auflöst, entsteht bei dem zuvor beschriebenen erfindungsgemäßen Verfahren eine separate, disperse Phase mit einem hohen Anteil an Riech- und/oder Aromastoffen.

Figur 1:
Kontinuierlich arbeitender geschlossener beheizbarer Schmelzeinbetter zur Herstellung von eingebetteten Riech- und/oder Aromastoffen, sowie Dosiergeräte für die Pulvermischung und das flüssige Aroma bzw. den Riechstoff

### Legende zu Figur 1:

- (1):: homogenes pulvriges Gemisch aus Trägerstoff enthaltendem Einbettungsmittel
- (2):: gravimetrische Dosiervorrichtung für das pulvrige Gemisch aus Trägerstoff enthaltendem Einbettungsmittel
- (3):: gleichläufiger Doppelwellenextruder
- (4):: Gewindebesatz zum Einziehen des pulvrigen Gemischs (1) und zum Zumischen der Riech- und/oder Aromastoffe (6)
- (5):: Motor
- (6):: Riech- und/oder Aromastoffe
- (7):: Vorratsbehälter für Riech- und/oder Aromastoffe (6)
- (8):: Doppelkolbenpumpe
- (9):: Druckhalteventil
- (10):: Schmelzeinbetterbesatz aus Knet- und Gewindeelementen
- (11):: Gewindebesatz zum Austragen und Extrudieren der geschmolzenen Dispersion
- (12):: geschmolzene Dispersion aus an Trägerstoff adsorbierten Riech- und/oder Aromastoffen und Polyolmatrix

## Patentansprüche

1. Einbettungsmittel für Riech- und/oder Aromastoffe enthaltend einen Trägerstoff, der sowohl als Adsorbens als auch als Feinverteilungsmittel für die Riech- und/oder Aromastoffe dient.

2. Einbettungsmittel gemäß Anspruch 1, dadurch gekennzeichnet, daß das Einbettungsmittel und der Trägerstoff nicht miteinander mischbar sind.

3. Einbettungsmittel nach einem der Ansprüche 1 oder 2, dadurch gekennzeichnet, daß es ≤ 30 Gew.-% Riech- und/oder Aromastoffe enthält.

4. Einbettungsmittel nach einem der Ansprüche 1 bis 3, dadurch gekennzeichnet, daß es zwischen 5 und 30 Gew.-% Riech- und/oder Aromastoffe enthält.

5. Einbettungsmittel nach einem der Ansprüche 1 bis 4, dadurch gekennzeichnet, daß die Einbettungsmitteln als kontinuierliche Phase Polyolschmelzen enthalten.

6. Einbettungsmittel nach einem der Ansprüche 1 bis 5, dadurch gekennzeichnet, daß die Polyolschmelzen aus einer Kohlenhydratmatrix bestehen, die Maltodextrin im Bereich von 40 und 50 Gew.-%, Saccharose und/oder Lactose im Bereich von 20 bis 30 Gew.-% sowie Glucose im Bereich von 20 bis 30 Gew.-% enthalten.

7. Einbettungsmittel nach einem der Ansprüche 1 bis 6, dadurch gekennzeichnet, daß es vorzugsweise 1 bis 15 Gew.-%, besonders bevorzugt 2 bis 10 Gew.-% an Trägerstoff enthält.

8. Einbettungsmittel nach einem der Ansprüche 1 bis 7, dadurch gekennzeichnet, daß es sich bei den Trägerstoffen um Celluloseether und/oder bzw. feinteilige Kieselsäure (Kieselgur, getrocknetes Kieselgel oder pyrogene Kieselsäure) handelt.

9. Einbettungsmittel nach einem der Ansprüche 1 bis 8, dadurch gekennzeichnet, daß es sich bei den Trägerstoffen vorzugsweise um Methylcellulose, Hydroxypropylcellulose, Hydroxypropylmethylcellulose oder pyrogene Kieselsäure handelt.

10. Einbettungsmittel nach einem der Ansprüche 1 bis 9, dadurch gekennzeichnet, die eingesetzten Trägerstoffe vorzugsweise eine Körnung von < 300 µm aufweisen.

11. Einbettungsmittel nach einem der Ansprüche 1 bis 10, dadurch gekennzeichnet, daß die eingesetzten Trägerstoffe besonders bevorzugt eine Körnung von < 100 µm aufweisen.

12. Einbettungsmittel nach einem der Ansprüche 1 bis 11, dadurch gekennzeichnet, daß die eingesetzten Trägerstoffe höchst bevorzugt eine Körnung von < 63 µm aufweisen.

13. Einbettungsmittel nach einem der Ansprüche 1 bis 12, dadurch gekennzeichnet, daß die eingesetzten Trägerstoffe mit Aromastoffen Gelkörper bilden, die auf < 63 µm feinzerteilbar sind.

14. Einbettungsmittel nach einem der Ansprüche 1 bis 13, dadurch gekennzeichnet, daß die Riech- und/oder Aromastoffe durch Adsorption oder Gelbildung an die Trägerstoffe fixiert werden.

15. Einbettungsmittel nach einem der Ansprüche 1 bis 14, dadurch gekennzeichnet, daß die Riech- und/oder Aromastoffe als Dispersion in die Schmelze eingebettet werden.

16. Verfahren zur Einbettung von Riech- und/oder Aromastoffen, dadurch gekennzeichnet, daß ein Einbettungsmittel nach einem der Ansprüche 1 bis 15 eingesetzt wird.

17. Verfahren nach Anspruch 16, dadurch gekennzeichnet, daß
a) das Einbettungsmittel und die Trägerstoffe im einem pulvrigen Gemisch homogen verteilt werden,
b) einem Schmelzeinbetter das Pulvergemisch aus Einbettungsmitteln und Trägerstoffen kontinuierlich zugeführt wird,
c) das Pulver vor dem Aufschmelzen mit Riech- und/oder Aromastoffen beladen wird, die bevorzugt am Trägerstoff adsorbiert sind bzw. mit dem Trägerstoff Gelkörper bilden,
d) die Schmelzeinbettung der Riech- und/oder Aromastoffe erfolgt,
e) die mehrphasige Einbettungssschmelze kontinuierlich abgeführt wird
f) und nach Erkalten der Einbettungsschmelze ein mehrphasiger Feststoffverbund entsteht.

18. Verfahren nach einem der Ansprüche 16 oder 17, dadurch gekennzeichnet, daß nach Erkalten der Einbettungsschmelze ein mehrphasiger Feststoffverbund entsteht.

19. Verfahren nach einem der Ansprüche 16 bis 18, dadurch gekennzeichnet, daß die Einbettung der Riech- und/oder Aromastoffe bei Temperaturen im Bereich von 90°C bis110°C erfolgt.

20. Verfahren nach einem der Ansprüche 16 bis 19, dadurch gekennzeichnet, daß der erstarrte mehrphasige Feststoffverbund 1 bis 6 Gew.-% an Wasser enthält.

21. Verfahren nach einem der Ansprüche 16 bis 20, dadurch gekennzeichnet, daß der erstarrte mehrphasige Feststoffverbund besonders bevorzugt zwischen 1,5 und 4 Gew.-% an Wasser enthält.

22. Verwendung des Einbettungsmittels nach einem der Ansprüche 1 bis 15, zur Herstellung eines mehrphasigen Feststoffverbundes mit eingebetteten Riech- und/oder Aromastoffen.

23. Mehrphasiger Feststoffverbund, dadurch gekennzeichnet, daß die disperse Phase mit einem hohen Anteil an Riech- und/oder Aromastoffen beladen ist und von der kontinuierlichen Phase (Kohlenhydratmatrix), die ebenfalls Riech- und/oder Aromastoffe enthält, umhüllt und dadurch vor Verlust bzw. Schädigung der Riech- und/oder Aromastoffe geschützt wird.
